# EUROPÄISCHE PATENTANMELDUNG

(11) **EP 3 336 327 A2**
(43) Veröffentlichungstag der Anmeldung: **20.06.2018**
(21) Anmeldenummer: 17001825.3
(22) Anmeldetag: 08.11.2017
(51) Int. Cl.: F02B 29/04, F02M 25/06, F02M 35/10

(54) **BRENNKRAFTMASCHINE**

(30) Priorität: 15.12.2016 DE 102016014904
(71) Anmelder: DEUTZ Aktiengesellschaft, 51149 Köln (DE)
(72) Erfinder: Joisten-Pieritz, Joachim, 53925 Kall (DE); Schwabauer, Paul, 56410 Montabaur (DE)

(57) **Zusammenfassung**

2. Brennkraftmaschine, insbesondere Dieselbrennkraftmaschine mit wenigstens einem Ladeluftkühler, mit wenigstens einem Steuergerät, mit wenigstens einem ersten und einem zweiten Kühlkreislauf, wobei der Kühler des ersten Kühlkreislaufs mit dem Kühlmittel der Brennkraftmaschine strömungsverbunden ist und der Kühler des zweiten Kühlkreislaufs der Brennkraftmaschine mit dem Ladeluftkühler strömungsverbunden ist.

## Beschreibung

Die Erfindung betrifft eine Brennkraftmaschine, insbesondere Dieselbrennkraftmaschine mit wenigstens einem Ladeluftkühler, mit wenigstens einem Steuergerät, mit wenigstens einem ersten und einem zweiten Kühlkreislauf, wobei der Kühler des ersten Kühlkreislaufs mit dem Kühlmittel der Brennkraftmaschine strömungsverbunden ist und der Kühler des zweiten Kühlkreislaufs der Brennkraftmaschine mit dem Ladeluftkühler strömungsverbunden ist.

Aus der DE 10 2004 047 452 A1 ist ein Kühlsystem einer Brennkraftmaschine mit einem ersten Kühlkreis eines Zylinderkopfes und einem zweiten Kühlkreis eines Motorblockes bekannt, die miteinander verbunden sind. Ein steuerbares Stellmittel zur Regulierung einer Aufteilung eines Kühlmittelstromes ist zwischen dem ersten und zweiten Kühlkreis vorhanden.

Ein ähnliches Kühlsystem mit einem ersten Kühlkreis zur Kühlung des Zylinderkopfes und einem zweiten Kühlkreis zur Kühlung des Zylinderblockes ist aus der EP 1 035 306 A2 bekannt.

Die DE 10 2004 024 289 A1 beschreibt ein Kühlsystem für ein Fahrzeug mit einem Hochtemperaturkreislauf und einem Niedrigtemperaturkreislauf. Der Hochtemperaturkreislauf ist zur Kühlung der Brennkraftmaschine vorgesehen, der Niedrigtemperaturkreislauf dient zur Kühlung eines Ladeluftkühlers und ggf. eines Ölkühlers.

Auch aus der DE 10 2011 101 337 A1 ist eine Kreislaufanordnung mit einem Niedrigtemperaturkreislauf zur Kühlung von Nebenaggregaten einer Brennkraftmaschine und einem Hochtemperaturkreislauf zur Kühlung der Brennkraftmaschine und weiterer Nebenaggregate bekannt.

Die JP 06-60745 U offenbart eine Brennkraftmaschine mit zumindest einem Zylinder mit einem eine Zylinderlaufbuchse aufnehmenden Zylindergehäuse sowie mit einem Zylinderkopf, wobei die Zylinderlaufbuchse von einem ersten und einem zweiten Kühlmantel umgeben ist, wobei der erste Kühlmantel mit einem Kühlraum im Zylinderkopf strömungsverbunden ist.

Der erste Kühlmantel ist vom zweiten Kühlmantel innerhalb des Zylindergehäuses strömungsmäßig getrennt. Ähnliche Brennkraftmaschinen sind auch aus der JP 55-057614 A oder der JP 58- 65927 A bekannt.

Derzeit bereitet eine hoch effiziente Ölabscheidung bei der Kurbelgehäuseentlüftung große Probleme. Es gibt auf dem Markt unterschiedliche Systeme, die entsprechende Anforderungen an höchste Abscheidegrade bezüglich der im Blow-By-Gas vorhandenen Ölanteile zu genügen versuchen. Dabei ist der technische Aufwand beträchtlich und dementsprechend kostenintensiv.

Aufgabe der vorliegenden Erfindung ist es, den Ladeluftkühlkreislauf in Bezug auf Gegendruck und Einbauraum, als auch auf die Beschleunigungsperformance des Motors zu optimieren.

Darstellung einer hocheffizienten, wartungsfreien Kurbelgehäuseentlüftung in Verbindung mit dem neuen Ladeluftkühlungskonzept. Ziel ist eine möglichst integrierte Lösung für ein leitungsloses Motordesign.

Die Aufgabe wird erfindungsgemäß durch eine Brennkraftmaschine, insbesondere Dieselbrennkraftmaschine mit wenigstens einem Ladeluftkühler, mit wenigstens einem Steuergerät, mit wenigstens einem ersten und einem zweiten Kühlkreislauf, wobei der Kühler des ersten Kühlkreislaufs mit dem Kühlmittel der Brennkraftmaschine strömungsverbunden ist und der Kühler des zweiten Kühlkreislaufs der Brennkraftmaschine mit dem Ladeluftkühler strömungsverbunden ist, gelöst.

Weiter ist erfindungsgemäß vorgesehen, dass das Steuergerät im Bereich des Ladeluftkühlers in der Weise angeordnet ist, dass es vom Kühlkreislauf desselbigen gekühlt werden kann.

In einer anderen erfindungsgemäßen Ausgestaltung ist vorgesehen, dass der zweite Kühlkreislauf mit wenigstens einer Pumpe strömungsverbunden ist.

Eine erfindungsgemäße Weiterbildung sieht vor, dass sie eine aktive Kurbelgehäuseentlüftung aufweist, die wenigstens ein Venturirohr enthält.

Weiter ist erfindungsgemäß vorgesehen, dass das Venturirohr als eine Art Saustrahlpumpe aufgebaut ist.

In einer anderen erfindungsgemäßen Ausgestaltung ist vorgesehen, dass der Ladeluftkühler auf dem Zylinderkopfdeckel nahezu leitungslos verbaut ist.

Eine erfindungsgemäße Weiterbildung sieht vor, dass der erste und der zweite Kühlkreislauf mittels wenigstens eines Mischventils strömungsverbunden sind, so, dass insbesondere in der Aufheizphase der Ladeluftkühler mittels des Kühlwassers des ersten Kreislaufs aufgeheizt werden kann.

Weiter ist erfindungsgemäß vorgesehen, dass im Wesentlichen der gesamte Bereich oberhalb des Zylinderkopfdeckels zur Vermeidung von Resonanz und Übergewicht mit einer bionischen Haube abgedeckt ist.

In einer anderen erfindungsgemäßen Ausgestaltung ist vorgesehen, dass die bionische Haube eine Innenstruktur bzw. -verrippung aufweist, die über keine zwei identischen Innenflächen bzw. -rippen verfügt.

Weiter kann die Ladeluftkühlung bei kalten Temperaturen möglichst abschaltbar gestaltet sein. Die luftseitige Auslegung der Ladeluftkühlung ist unabhängig von Kundeneinbau. Optional Integration der Motorsteuergerätekühlung bei motorintegriertem Steuergeräteanbau. Optische und akustische Optimierung des Gesamtmotors. Generierung einer motornahen Ladeluftführung, die eine optimale Auslegung des Motorbetriebs ermöglicht.

Im Folgenden soll die Erfindung anhand eines Ausführungsbeispiels näher erläutert werden, es zeigen:
- Figur 1: eine Ansicht einer Brennkraftmaschine mit einem Hoch- und einem Niedrigtemperaturkreislauf ohne Haube
- Figur 2: eine Ansicht einer Brennkraftmaschine mit einem Hoch- und einem Niedrigtemperaturkreislauf mit Haube
- Figur 3: die Innenseite der Haube aus Figur 2
- Figur 4: eine Seitenansicht der Darstellung aus Figur 2
- Figur 5: einen Schnitt A-A aus Figur 3.

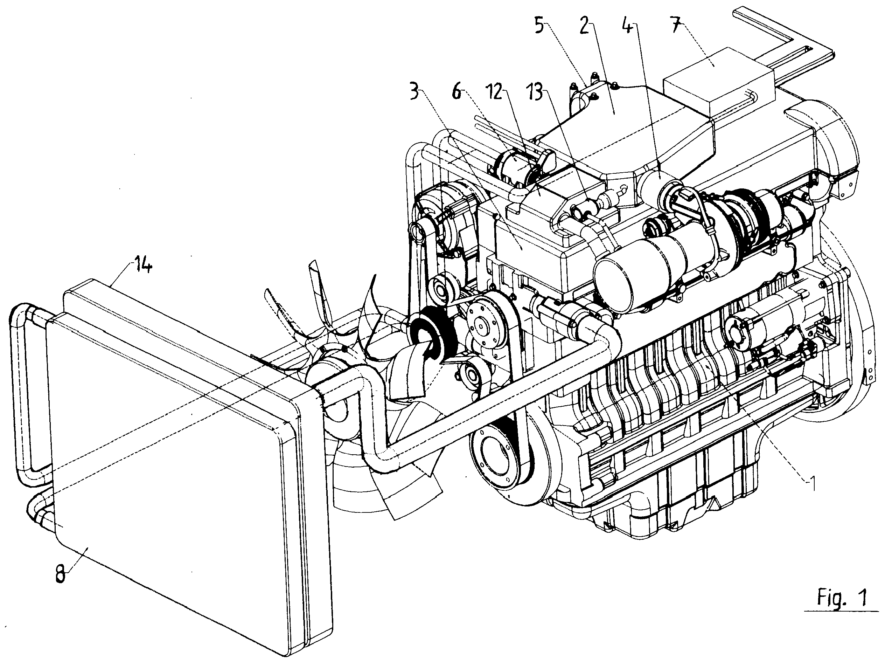

Figur 1 zeigt eine Ansicht einer Brennkraftmaschine 1 mit einem Hoch- und einem Niedrigtemperaturkreislauf ohne Haube 11, die in den folgenden Figuren zu sehen sein wird.

Der Hubkolbenmotor 1 weist einen Niedrigtemperatur-Wasser-Luft-Ladeluftkühler 2 auf, der auf seiner Ventildeckelhaube 3 derart angeordnet ist, dass die ungekühlte Luft vom Turbolader 4 direkt ohne zusätzliche Verrohrung in den Niedrigtemperatur-Wasser-Luft-Ladeluftkühler 2 eintreten kann. Die den Niedrigtemperatur-Wasser-Luft-Ladeluftkühler 2 verlassende kalte Ladeluftführung vor den Einlassventilen des Motors 5 benötigt ebenfalls nur geringsten Verrohrungsaufwand. Die ladeluftkühlernah verbaute Kühlmittelpumpe 6 sorgt für einen effizienten Kühlmitteldurchsatz im Niedrigtemperatur-Wasserkreislauf und pumpt das Wasser auf Anforderung des Motorsteuergeräts 7 durch den Niedrigtemperaturkühler 8. Die oberhalb der Ventildeckelhaube 3 angeordnete Kurbelgehäuseentlüftung 12 befindet sich in unmittelbarer Nachbarschaft zum Niedrigtemperatur-Wasser-Luft-Ladeluftkühler 2, so dass das Venturirohr 13, das in Wirkverbindung mit dem Niedrigtemperatur-Wasser-Luft-Ladeluftkühler 2 und der Kurbelgehäuseentlüftung 12 steht, ebenfalls mit geringstem Verrohrungsaufwand direkt an die Kurbelgehäuseentlüftung 12 und den Niedrigtemperatur-Wasser-Luft-Ladeluftkühler 2 angrenzt. Der Motorkühler 14 ist mit dem Kühlkreislauf des Hubkolbenmotors 1 und der Kühlwasserpumpe in Wirkverbindung, um den Hubkolbenmotor 1 mittels des Hochtemperaturkreislaufs zu kühlen.

Am Hubkolbenmotor 1 ist ein Niedrigtemperatur-Wasser-Luft-Ladeluftkühler 2 oberhalb der Ventildeckelhaube 3 derart angebaut, das ladeluftseitig eine direkte, strömungsoptimierte Verbindung zwischen der verdichterseitigen, (ungekühlten) Seite 4 und der kalten Ladeluftführung vor den Einlassventilen des Motors 5 geschaffen wird. Die Kühlung des Systems erfolgt mit einem Niedrigtemperatur-Wasser-Luftkühler, der vor dem bisherigen Motorkühler angeordnet wird. Die Kühlmittelversorgung des Niedrigtemperatur-Wasser-Luft-Ladeluftkühlers 2 erfolgt mittels einer elektrisch angetriebenen, regelbaren, ladeluftkühlernah verbauten Kühlmittelpumpe 6.

Der vorhandene Niedrigtemperatur-Kühlmittelkreislauf bietet die Option, ein oberhalb der Ventilhaube montiertes Motorsteuergerät 7 mit in diesen Kühlkreislauf einzubinden.

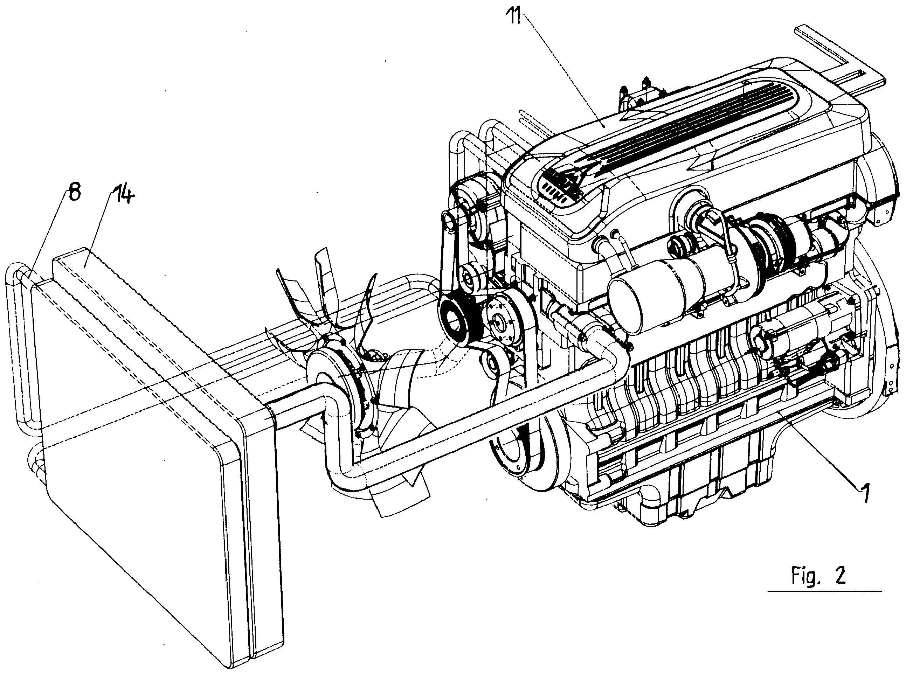

In Figur 2 wird eine Ansicht einer Brennkraftmaschine 1 mit einem Hoch- und einem Niedrigtemperaturkreislauf und ihren Kühlern 8, 14 dargestellt, wobei über den auf der Ventildeckelhaube 3 angeordneten Vorrichtungen wie Motorsteuergerät 7, Niedrigtemperatur-Wasser-Luft-Ladeluftkühler 2, Kühlmittelpumpe 6, Kurbelgehäuseentlüftung 12 und Venturirohr 13 eine Haube 11 angeordnet ist.

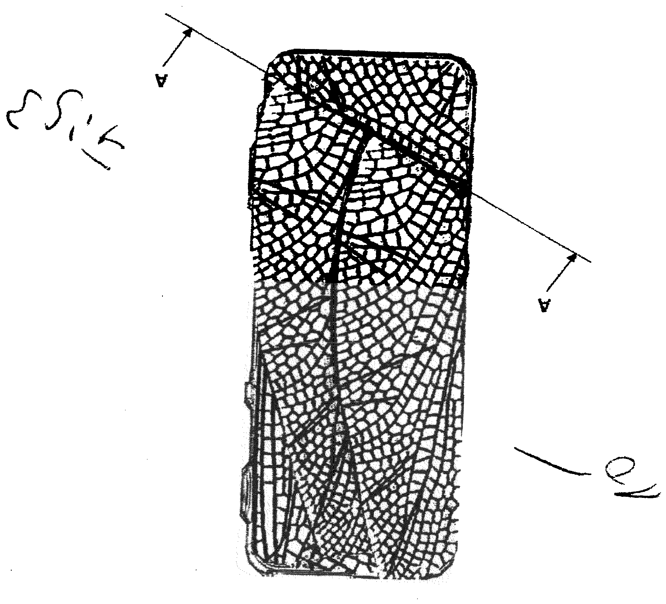

Figur 3 zeigt die Innenseite der Haube 11 aus Figur 2.

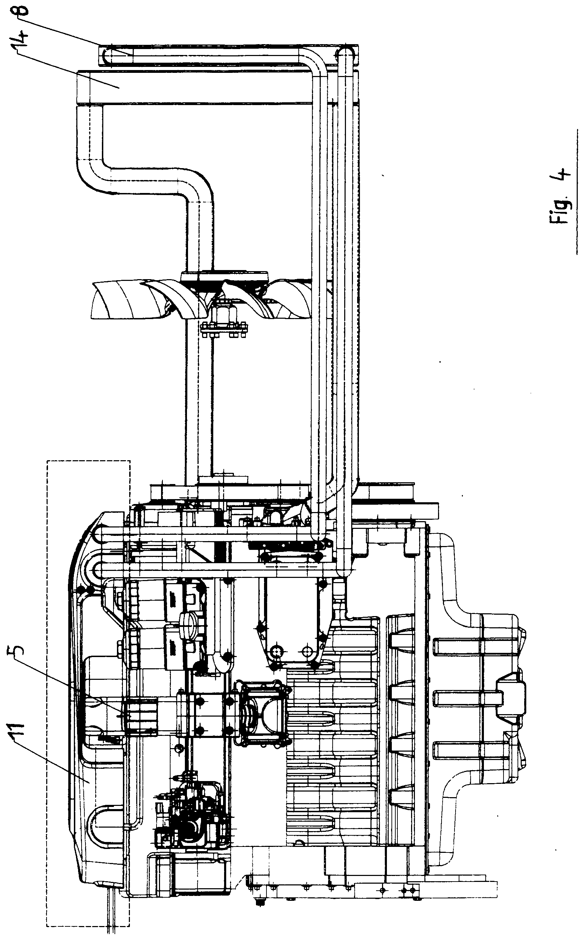

In Figur 4 ist eine Seitenansicht der Darstellung aus Figur 2 zu sehen, wobei die vorgenannte Einheit als eigenständiges Modul 9 ausgebildet ist.

Hierbei werden die einzelnen Komponenten 2, 6, 7, 12 und 13 durch eine schallschluckende, mit einer bionischen Innenverrippung 10 ausgestatteten Haube 11 abgedeckt.

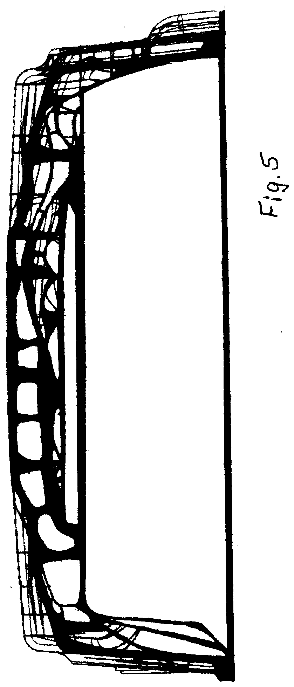

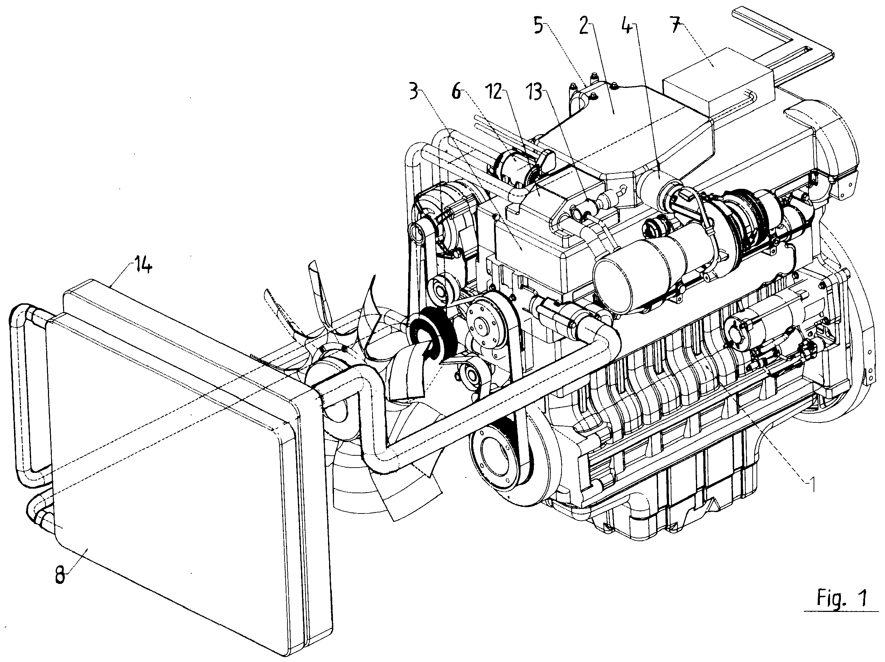

Figur 5 zeigt einen Schnitt A-A der Haube 11 aus Figur 3.

Der Luftweg der Ladeluft nimmt den kürzesten und strömungsgünstigsten Weg.

Es wird keine weitere Verrohrung notwendig, die die Luftführung des Motors negativ beeinflussen könnte. Der Motor leistet durch die vollständige Integration des Systems mehr, da die systemrelevanten Verluste sinken.

Dadurch ist die optimale Luftversorgung des Motors immer sichergestellt. Der geringe Strömungswiederstand der Ladeluftstrecke führt zu einer Reduktion des Kraftstoffverbrauchs des Motors.

Die Totvolumina in der Ladeluftstrecke sind auf das absolute Minimum reduziert. Dadurch wird die Totzeit des Ladedruckaufbaus optimiert, so dass die Dynamik des Motors deutlich gewinnt. Durch die regelbare, elektrisch angetriebene Kühlmittelpumpe für den Niedrigtemperatur-Kühlmittelkreislauf kann direkt auf die Ladelufttemperatur Einfluss genommen werden. Während der Kaltlaufphase des Motors wird der Kühlmittelfluss des Niedrigtemperatursystems so weit minimiert, das sich der gleiche Effekt wie bei einer Ladeluftkühlerumgehung mit all seinen Vorteilen bezüglich Motorwarmlaufs ergibt.

Mit der regelbaren Ladeluftkühlung kann auch das Anspringverhalten eines Abgasnachbehandlungssystems bei Motorwarmlauf deutlich positiv beeinflusst werden.

Bei warmem Motor kann die Ladelufttemperaturregelung genutzt werden, die Regeneration eines Abgasnachbehandlungssystems zu unterstützen.

Ein motornaher Anbau des Motorsteuergerätes (ECU) bietet für den Kunden deutliche Handling-Vorteile. Bei Anbau des Steuergerätes oberhalb der Ventilhaube kann ein Großteil der bisherigen Verkabelung verdeckt und damit geschützt angebaut werden. Die Anzahl der Übergabestellen (Verbindungsstecker) zum Gerät kann ebenso wie die notwendigen Leitungslängen reduziert werden. Die Kühlung der ECU kann an den Niedrigtemperatur-Kühlkreislauf des Ladeluftkühlmoduls mit sehr kurzen Leitungslängen, voll integriert, angeschlossen werden. Das Motorsteuergerät muss nicht mehr zu Kühlzwecken in den Kraftstoffkreislauf eingebunden werden. Dies führt zu einer deutlichen Kostenreduktion. Außerdem wird die Motorarchitektur deutlich übersichtlicher und das äußere Erscheinungsbild des Motors gewinnt deutlich.

Eine Abdeckhaube mit einer bionischen Innenverrippung zeichnet sich nach außen hin durch eine glatte, schmutzabweisende Oberfläche aus. Die notwendige Steifigkeit des Bauteils wird durch eine völlig ungleichmäßige, jedoch den eingeleiteten Kräften optimal Rechnung tragenden Stützstruktur generiert. Der Vorteil der bionischen Innenverrippung liegt in einem optimierten Materialeinsatz für die Haube und in einer Optimierung der akustischen Eigenschaften, da es keine gleichartigen Flächenelemente gibt, die gemeinsam durch eine Resonanz des Motors in Schwingung versetzt werden können. Falls eine Resonanzfrequenz getroffen werden sollte, kann nur jeweils ein ganz kleines Segment der Haube in Schwingung versetzt werden, was sich günstig auf die Schallabstrahlung des Gesamtmotors auswirkt.

Der Niedrigtemperatur-Wasser-Luft-Ladeluftkühler 2 ist, wie in Figur 1 zu sehen, oberhalb der Ventildeckelhaube 3 derart an eine Hubkolbenbrennkraftmaschine 1 angebaut, dass ladeluftseitig eine direkte, strömungsoptimierte Verbindung zwischen der verdichterseitigen, (ungekühlten) Seite 4 und der kalten Ladeluftführung vor den Einlassventilen des Motors 5 geschaffen wird.

Die Kühlmittelversorgung des Niedrigtemperatur-Wasser-Luft-Ladeluftkühlers 2 erfolgt mittels einer elektrisch angetriebenen, regelbaren, vom Motorsteuergerät 7 direkt oder indirekt angesteuerten, ladeluftkühlernah verbauten Kühlmittelpumpe 6.

Der vorhandene Niedrigtemperatur-Kühlmittelkreislauf bietet die Option, ein oberhalb der Ventilhaube montiertes Motorsteuergerät 7 mit in diesen Kühlkreislauf einzubinden.

Die oben beschriebene Einheit ist als eigenständiges Modul 9 ausgebildet.

Hierbei werden die einzelnen Komponenten durch eine schallschluckende, mit einer bionischen Innenverrippung 10 ausgestatteten Haube 11 abgedeckt.

Diese Haube 11 beinhaltet eine hoch effizient arbeitende Kurbelgehäuseentlüftung 12, die nach dem sogenannten Prallplatten- oder Zyklon-Prinzip oder einer Kombination dieser und oder weiterer bekannter Abscheide-Systeme funktioniert.

Um eine entsprechende Effizienzsteigerung des Systems gewährleisten zu können, ist die Zufuhr von Fremdenergie notwendig, um ein vorhandenes Druckgefälle zur Verstärkung des Abscheidegrades darstellen zu können.

In der zuvor beschriebenen Haube 11 ist daher ein Venturirohr 13 integriert, welches den vorhandenen Ladedruck am Ladeluftkühler 2 nutzt, um den notwendigen Unterdruck im Kurbelgehäuseentlüftungssystem 12 zu generieren. Es wird ein definierter Teilstrom aus der vorgespannten Ladeluftstrecke entnommen und an geeigneter Stelle in den Ansaugtrakt des Motors zurückgeführt.

Der Luftweg der Ladeluft nimmt den kürzesten und strömungsgünstigsten Weg.

Dadurch ist die optimale Luftversorgung des Motors immer sichergestellt. Der geringe Strömungswiderstand der Ladeluftstrecke führt zu einer Reduktion des Kraftstoffverbrauchs des Motors und minimiert die Verluste.

Die Totvolumina in der Ladeluftstrecke sind auf das absolute Minimum reduziert. Dadurch wird die Totzeit des Ladedruckaufbaus optimiert, so dass die Dynamik des Motors deutlich gewinnt. Durch die regelbare, elektrisch angetriebene Kühlmittelpumpe 6 für den Niedrigtemperatur-Kühlmittelkreislauf kann direkt auf die Ladelufttemperatur Einfluss genommen werden. Während der Kaltlaufphase des Motors wird der Kühlmittelfluss des Niedrigtemperatursystems so weit minimiert, das sich der gleiche Effekt wie bei einer Ladeluftkühlerumgehung mit all seinen Vorteilen bezüglich Motorwarmlaufs ergibt.

Mit der regelbaren Ladeluftkühlung kann auch das Anspringverhalten eines Abgasnachbehandlungssystems bei Motorwarmlauf deutlich positiv beeinflusst werden.

Bei warmem Motor kann die Ladelufttemperaturregelung genutzt werden, die Regeneration eines Abgasnachbehandlungssystems zu unterstützen.

Ein motornaher Anbau des Motorsteuergerätes 7 (ECU), bietet Handling-Vorteile insbesondere im Service-Fall. Bei Anbau des Steuergerätes oberhalb der Ventilhaube kann ein Großteil der bisherigen Verkabelung verdeckt und damit geschützt angebaut werden. Die Anzahl der Übergabestellen (Verbindungsstecker) zum Gerät kann, ebenso wie die notwendigen Leitungslängen, reduziert werden. Die Kühlung der ECU kann an den Niedrigtemperatur-Kühlkreislauf des Ladeluftkühlmoduls mit sehr kurzen Leitungslängen, voll integriert, angeschlossen werden. Das Motorsteuergerät 7 muss nicht mehr zu Kühlzwecken in den Kraftstoffkreislauf eingebunden werden. Dies führt zu einer deutlichen Kostenreduktion. Außerdem wird die Motorarchitektur deutlich übersichtlicher und das äußere Erscheinungsbild des Motors gewinnt deutlich.

Eine Abdeckhaube 11 mit einer bionischen Innenverrippung 10 zeichnet sich nach außen hin durch eine glatte, schmutzabweisende Oberfläche aus. Die notwendige Steifigkeit des Bauteils wird durch eine völlig ungleichmäßige, jedoch den eingeleiteten Kräften optimal Rechnung tragende Stützstruktur generiert. Der Vorteil der bionischen Innenverrippung 10 liegt in einem optimierten Materialeinsatz für die Haube und in einer Optimierung der akustischen Eigenschaften, da es keine gleichartigen Flächenelemente gibt, die gemeinsam durch eine Resonanz des Motors in Schwingung versetzt werden können. Falls eine Resonanzfrequenz getroffen werden sollte, kann nur jeweils ein ganz kleines Segment der Haube in Schwingung versetzt werden, was sich günstig auf die Schallabstrahlung des Gesamtmotors auswirkt.

Zur Erzielung hoher Abscheidegrade von im motorischen "Blow-By-Gas" enthaltenen Ölpartikeln in der Kurbelgehäuseentlüftung einer Hubkolbenbrennkraftmaschine sind hohe Aufwände notwendig. Dies gilt besonders im Hinblick auf zukünftige Abgasgesetzstufen.

Dies kann derzeit eigentlich nur durch den Einsatz von Fremdenergie realisiert werden.

Alternativ zu bekannten, extern angetriebenen, rotatorischen Systemen kann zu diesem Zweck ein Überdruck als Antriebsenergie herangezogen werden, um eine ausreichend hohe Druckdifferenz im Kurbelgehäuseentlüftungssystem zu generieren, wie sie zum Erreichen der notwendigen Abscheidegrade notwendig ist.

Hier wird nun die Kurbelgehäuseentlüftung 12 mit einem Venturirohr 13, welches der notwendigen Unterdruckerzeugung dient, und einem Ladeluftkühler 2 leitungslos bzw. mit minimalem Leitungsaufwand direkt in das Ladeluftsystem einer aufgeladenen Hubkolbenmaschine 1 integriert.

Dabei bildet dieses System ein Modul, welches auf einen bestehenden Motor optional aufgebaut werden kann.

Derart kann mit minimalem Installationsaufwand ein höchst effizientes Abscheidesystem für Ölpartikel aus dem "Blow-By-Gas" einer Hubkolben-Brennkraftmaschine dargestellt werden.

Der ganze Aufbau wird hierbei unsichtbar unter einer schallemissionsoptimierten Abdeckhaube 11 mit bionischer Innenverrippung 10 verbaut.

### Bionische Abdeckhaube :

Die innenliegende Stütz-Struktur entspricht z. B. der Stütz-Struktur eines Libellenflügels.

Diese kann als Struktur eines Flügels aufgebaut sein oder aus verschiedenen Segmenten einer Flügelstruktur, die entweder symmetrisch oder asymmetrisch angeordnet werden, bestehen.

Die Höhe der Verrippung kann gleichbleibend sein, idealerweise folgt sie jedoch dem bionischen Vorbild und macht den Materialeinsatz vom Kraftverlauf im Bauteil abhängig.

### Bezugszeichen

- 1: Hubkolbenmotor
- 2: Niedrigtemperatur-Wasser-Luft-Ladeluftkühler
- 3: Ventildeckelhaube
- 4: ungekühlte Luft vom Turbolader
- 5: kalte Ladeluftführung vor den Einlassventilen des Motors
- 6: ladeluftkühlernah verbaute Kühlmittelpumpe
- 7: Motorsteuergerät
- 8: Niedrigtemperaturkühler
- 9: eigenständiges Modul
- 10: bionische Innenverrippung
- 11: Haube
- 12: Kurbelgehäuseentlüftung
- 13: Venturirohr
- 14: Motorkühler

## Patentansprüche

1. Brennkraftmaschine, insbesondere Dieselbrennkraftmaschine mit wenigstens einem Ladeluftkühler, mit wenigstens einem Steuergerät, mit wenigstens einem ersten und einem zweiten Kühlkreislauf, wobei der Kühler des ersten Kühlkreislaufs mit dem Kühlmittel der Brennkraftmaschine strömungsverbunden ist und der Kühler des zweiten Kühlkreislaufs der Brennkraftmaschine mit dem Ladeluftkühler strömungsverbunden ist.

2. Brennkraftmaschine nach Anspruch 1,
**dadurch gekennzeichnet, dass** das Steuergerät im Bereich des Ladeluftkühlers in der Weise angeordnet ist, dass es von dem Kühlreislauf desselbigen gekühlt werden kann.

3. Brennkraftmaschine nach einem oder mehreren der vorgenannten Ansprüche,
**dadurch gekennzeichnet, dass** der zweite Kühlkreislauf mit wenigstens einer Pumpe strömungsverbunden ist.

4. Brennkraftmaschine nach einem oder mehreren der vorgenannten Ansprüche,
**dadurch gekennzeichnet, dass** sie eine aktive Kurbelgehäuseentlüftung aufweist, die wenigstens ein Venturirohr enthält.

5. Brennkraftmaschine nach einem oder mehreren der vorgenannten Ansprüche,
**dadurch gekennzeichnet, dass** das Venturirohr als eine Art Saustrahlpumpe aufgebaut ist.

6. Brennkraftmaschine nach einem oder mehreren der vorgenannten Ansprüche,
**dadurch gekennzeichnet, dass** der Ladeluftkühler oberhalb dem Zylinderkopfdeckel nahezu leitungslos verbaut ist.

7. Brennkraftmaschine nach einem oder mehreren der vorgenannten Ansprüche,
**dadurch gekennzeichnet, dass** der erste und der zweite Kühlkreislauf mittels wenigstens eines Mischventils strömungsverbunden sind, so, dass insbesondere in der Aufheizphase der Ladeluftkühler mittels des Kühlwassers des ersten Kreislaufs aufgeheizt werden kann.

8. Brennkraftmaschine nach einem oder mehreren der vorgenannten Ansprüche,
**dadurch gekennzeichnet, dass** im Wesentlichen der gesamte Bereich oberhalb des Zylinderkopfdeckels zur Vermeidung von Resonanz und Übergewicht mit einer bionischen Haube abgedeckt ist.

9. Brennkraftmaschine nach einem oder mehreren der vorgenannten Ansprüche,
**dadurch gekennzeichnet, dass** die bionische Haube eine Innenstruktur bzw. -verrippung aufweist, die über keine zwei identischen Innenflächen bzw. -rippen verfügt.
